# EUROPEAN PATENT APPLICATION

(11) **EP 3 095 626 A1**
(43) Date of publication of application: **23.11.2016**
(21) Application number: 14873416.3
(22) Date of filing: 17.11.2014
(51) Int. Cl.: B60J 5/00, B60J 5/04, B60R 21/0136, B60J 5/06, B60J 5/10, E05F 15/632

(54) **VEHICLE DOOR OPEN/CLOSE DEVICE**

(30) Priority: 25.12.2013 JP 2013268106
(71) Applicant: Mitsubishi Jidosha Kogyo Kabushiki Kaisha, Tokyo 108-8410 (JP)
(72) Inventor: SHINOHARA, Satoshi, Tokyo 108-8410 (JP); KOMIYAMA, Takeshi, Tokyo 108-8410 (JP); YAMAGISHI, Takashi, Tokyo 108-8410 (JP)
(74) Representative: Vossius & Partner Patentanwälte Rechtsanwälte mbB
(86) International application number: PCT/JP2014/080385
(87) International publication number: WO 2015/098354

(57) **Abstract**

A door opening/closing device of a vehicle comprises: collision detection means which detects a collision of the vehicle; and stopping control means which, upon detection of a collision of the vehicle by the collision detection means, implements stopping control for terminating opening/closing control by opening/closing control means to stop the opening/closing operation of a door member.

## Description

### Technical Field

This invention relates to a door opening/closing device of a vehicle, which controls the opening/closing operation of a door member provided in the vehicle, such as an electric sliding door or an electric tail gate.

### Background Art

In a vehicle such as an automobile, an electric sliding door device for opening and closing an entrance to a rear seat, for example, has found practical use as a device for automatically opening and closing an opening area formed in a vehicle body. The electric sliding door device is configured such that in response to the operation of a start switch composed of a door knob or the like of a sliding door, a built-in electric motor starts to perform the opening or closing operation of the sliding door. Such an electric sliding door device is controlled to keep the sliding door from opening, while the vehicle is travelling, in compliance with the laws and regulations.

In recent years, moreover, various technologies for preventing the opening and closing of the sliding door during a vehicle travel due to the erroneous operation of the start switch have been proposed in an attempt to improve the safety of the vehicle. With an example of the technology, when a foot brake or a parking brake is acting at a vehicle speed of 3 km/h or lower, the immediately preceding decelerated state of the vehicle is confirmed, and a power sliding device is started except in a case where the decelerated state corresponds to sudden braking (see Patent Document 1).

According to the invention concerned with Patent Document 1, the opening operation of the sliding door during a vehicle travel due to the misoperation of the start switch can be suppressed. Even if the vehicle is moving, with the wheel being locked, for example, the opening operation of the sliding door can be suppressed.

### Prior Art Documents

### Patent Documents

Patent Document 1: Japanese Patent No. 3726956

### Summary of the Invention

### Problems to be solved by the invention

According to the invention concerned with Patent Document 1, the opening operation of a door member such as a sliding door due to the misoperation of the start switch can be suppressed, as described above. However, a further improvement in safety is desired in connection with the opening/closing operation of the door member.

In the event of a vehicle collision, for example, it is conceivable for a door member, such as a sliding door, to make an opening or closing operation as a result of its impact. If the door member becomes open when the vehicle collides, an occupant or luggage may fall to the outside. If the door member makes a closing operation from an open state, on the other hand, the occupant may get caught in the door member.

With the above-mentioned conventional technology, however, the opening/closing operation of the door member due to such an impact cannot be suppressed.

The present invention has been accomplished in light of the above circumstances. It is an object of this invention to provide a door opening/closing device of a vehicle which can suppress the opening/closing operation of a door member due to impact.

### Means for solving the problems

A first aspect of the present invention for solving the above problems lies in a door opening/closing device of a vehicle including: a door member provided to be capable of opening and closing an opening area formed in a vehicle body; a drive device for driving the door member so as to be opened and closed; and opening/closing control means for driving the drive device in response to an operation of a start switch by an occupant to control an opening/closing operation of the door member, the door opening/closing device comprising: collision detection means which detects a collision of the vehicle; and stopping control means which, upon detection of a collision of the vehicle by the collision detection means, implements stopping control for terminating opening/closing control by the opening/closing control means to stop the opening/closing operation of the door member.

A second aspect of the present invention lies in the door opening/closing device of a vehicle according to the first aspect, wherein the stopping control means prohibits implementation of the opening/closing control by the opening/closing control means for a certain period after completion of implementation of the stopping control.

A third aspect of the present invention lies in the door opening/closing device of a vehicle according to the first or second aspect, further comprising operating state detection means for detecting the operating state of the door member, wherein if the door member is detected by the operating state detection means to be moving after completion of implementation of the stopping control, the stopping control means further implements braking control for slowing down the movement of the door member.

A fourth aspect of the present invention lies in the door opening/closing device of a vehicle according to any one of the first to third aspects, further comprising operating state detection means for detecting the operating state of the door member, wherein if the collision of the vehicle is detected by the collision detection means and the door member is detected by the operating state detection means to be in a closing operation, the stopping control means implements the stopping control at a time when the closing operation of the door member ends.

A fifth aspect of the present invention lies in the door opening/closing device of a vehicle according to any one of the first to fourth aspects, wherein the stopping control means enables the manual operation of the door member after implementing the stopping control.

A sixth aspect of the present invention lies in the door opening/closing device of a vehicle according to any one of the first to fifth aspects, wherein the collision detection means is an impact sensor constituting an air bag device loaded on the vehicle.

### Effects of the Invention

According to the door opening/closing device of a vehicle concerned with the present invention, it is possible, for example, to suppress the opening or closing operation of the door member ascribed to impact or the like at the time of a collision of the vehicle. Hence, the door opening/closing device can inhibit an occupant or luggage from falling from the vehicle, or inhibit the occupant from getting caught in the door member, for example.

### Brief Description of the Drawings

[Fig. 1] is a side view showing an example of a vehicle loaded with a door opening/closing device according to the present invention.
[Fig. 2] is a view schematically showing an example of a drive device.
[Fig. 3] is a block diagram showing the schematic configuration of the door opening/closing device according to the present invention.
[Fig. 4] is a flow chart showing an example of door opening/closing control according to Embodiment 1 of the present invention.
[Fig. 5] is a flow chart showing an example of door opening/closing control according to Embodiment 2 of the present invention.

### Mode for Carrying Out the Invention

Embodiments of the present invention will now be described in detail with reference to the accompanying drawings.

### Embodiment 1

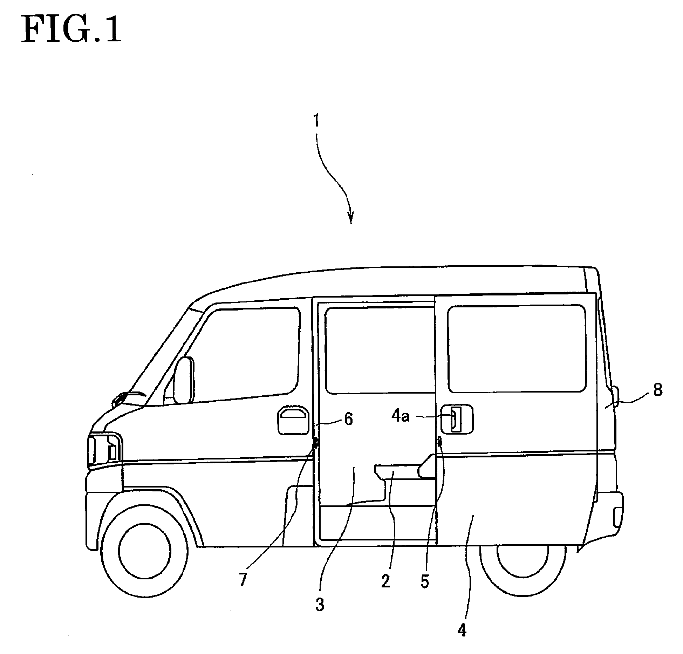

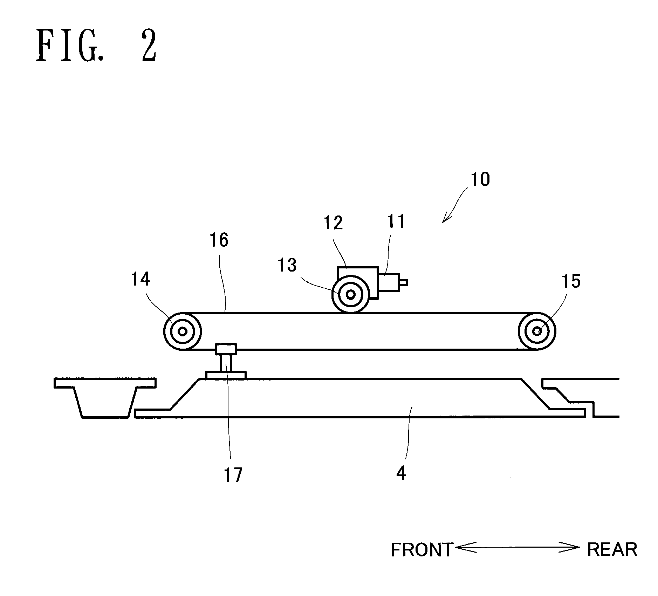

Fig. 1 is a side view of a vehicle loaded with a door opening/closing device according to Embodiment 1 of the present invention. Fig. 2 is a schematic view of sections of a sliding door and a drive device as viewed from above the vehicle.

First of all, the configuration of the vehicle equipped with the door opening/closing device according to the present embodiment will be described.

As shown in Fig. 1, a vehicle 1 equipped with a door opening/closing device according to the present embodiment is, for example, a minivan type automobile. An entrance 3 to a rear seat 2 is mounted with a sliding door 4 which is slid in a front-rear direction of the vehicle 1 to open and close the entrance 3. A latch mechanism 5 is provided in a front end part of the sliding door 4. A striker 7 is provided in a panel member 6 on the front side (left side in the drawing) of the entrance 3 of the vehicle 1. In a state where the entrance 3 is closed with the sliding door 4 (fully closed state), the latch mechanism 5 of the sliding door 4 engages the striker 7 of the panel member 6 to lock the sliding door 4.

The sliding door 4 is driven by a drive device equipped with a transmission motor as a drive source. Since the drive device for the sliding door 4 is in a well-known configuration, an example thereof will be briefly explained herein.

As shown in Fig. 2, for example, a drive device 10 for driving the sliding door 4 is equipped with a drive motor (electric motor) 11. To the drive motor 11, a drive pulley 13 is connected via a transmission mechanism 12 such as a speed reducer or an electromagnetic clutch. The drive pulley 13 is coupled to an endless wire 16 looped over a front guide pulley 14 and a rear guide pulley 15 arranged at positions spaced by nearly the longitudinal length of the sliding door 4 in the front-rear direction of the vehicle. A bracket 17 fixed at one end to an inner panel of the sliding door 4 has the other end coupled to the endless wire 16.

Upon driving of the drive motor 11 of the drive device 10 configured as above, the sliding door 4 slides between the front and rear guide pulleys 14 and 15 in collaboration with the endless wire 16 while being guided by a guide rail (not shown). As a result, the entrance 3 is opened and closed by the sliding door 4.

On the rear surface of the vehicle 1, a tail gate 8 for opening and closing an opening area of a luggage room is provided in an upper part of the vehicle body pivotably in an up-down direction. Like the sliding door 4, the tail gate 8 is also configured to be driven by a drive device (not shown) equipped with an electric motor as a drive source.

The door opening/closing device of a vehicle according to the present embodiment controls the opening/closing operation of the sliding door 4 as a door member. The door opening/closing device is characterized, for example, by performing "stopping control" for stopping the movement of the sliding door 4 when a collision of the vehicle 1 occurs, namely, by controlling, as appropriate, the drive device 10 to apply the brakes to the sliding door 4, thereby stopping the movement of the sliding door 4.

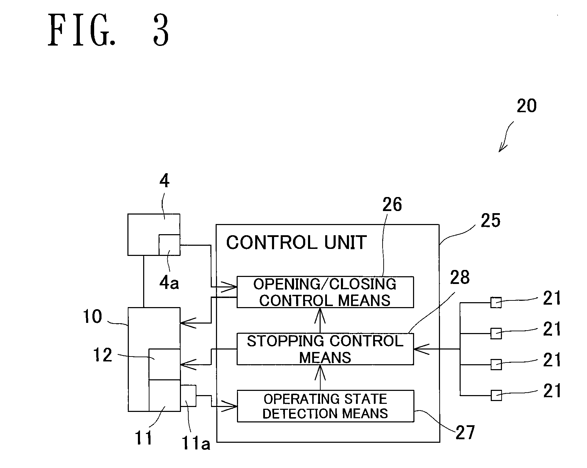

The configuration of the door opening/closing device according to the present embodiment will be described below. Fig. 3 is a block diagram showing the schematic configuration of the door opening/closing device according to the present embodiment.

A door opening/closing device 20 according to the present embodiment is equipped with a plurality of impact sensors 21 as a collision detection means, and a control unit 25 for controlling the opening/closing operation of the sliding door 4.

The impact sensor 21 detects impact made on the vehicle 1. In the present embodiment, the impact sensor 21 concurrently serves as an air bag device (not shown) installed on the vehicle 1. When impact greater than a predetermined value is detected by the impact sensor 21, it is determined that a collision of the vehicle 1 has occurred. The impact sensors 21 are provided at 4 locations, i.e., the front end, the rear end and the right and left side ends of the vehicle 1. It goes without saying that the number and arrangement of the impact sensors 21 are not limited, and may be decided on, as appropriate, according to needs.

The control unit 25 has an opening/closing control means 26, an operating state detection means 27, and a stopping control means 28.

When a door knob 4a (see Fig. 1) of the sliding door 4, as a start switch, is operated by an occupant, opening/closing control for opening and closing the sliding door 4 by driving the drive device 10 in response to the operation of the door knob 4a is exercised. Concretely, if the sliding door 4 is in a closed state, the sliding door 4 is operated in an opening direction (opening operation); if the sliding door 4 is in an open state, the sliding door 4 is operated in a closing direction (closing operation).

The "closing operation" includes "a sliding operation" for sliding the sliding door 4 toward the front of the vehicle 1, and "a closing-up operation" for moving the sliding door 4 toward the interior of the vehicle 1 until it becomes fully closed after the latch mechanism 5 of the sliding door 4 is engaged with the striker 7 of the panel member 6.

The operating state detection means 27 detects the operating state (movement) of the sliding door 4. In the present embodiment, the operating state detection means 27 detects the operating state of the sliding door 4 based on a signal from a pulse sensor 11a provided on the drive motor 11 constituting the drive device 10. For example, the operating state detection means 27 detects which of the operating states the sliding door 4 is in, a stop state, an opening operation state, or a closing operation state.

Upon detection of a collision of the vehicle 1 by the impact sensor 21, the stopping control means 28 implements "stopping control" for terminating the "opening/closing control" of the sliding door 4 by the opening/closing control means 26 to stop the opening operation or closing operation of the sliding door 4. That is, the brakes are applied to the sliding door 4 to stop the sliding door 4. Concretely, the drive motor 11 and the drive pulley 13 of the drive device 10 are connected together via the transmission mechanism (electromagnetic clutch) 12 to apply the brakes. By so doing, the movement of the sliding door 4 is suppressed, and the sliding door 4 can be stopped. Needless to say, the method of stopping the sliding door 4 is not limited.

By so applying the brakes to the sliding door 4 to stop the sliding door 4, the entrance 3 can be inhibited from opening widely in the event of a collision of the vehicle 1. If a collision occurs during the automatic operation (opening operation) of the sliding door 4, for example, the motion of the sliding door 4 is stopped on the spot, so that the wide opening of the entrance 3 can be suppressed. Even if the sliding door 4 performs an opening operation owing to impact at the time of the collision, for example, the brakes are applied to the sliding door 4 to stop the sliding door 4, so that the wide opening of the entrance 3 can be suppressed. Thus, a fall of the occupant or luggage from the vehicle 1 can be suppressed. If the sliding door 4 is making an automatic operation (closing operation) or is performing a closing operation because of impact at the time of the collision, on the other hand, the sliding door 4 is stopped, whereby the occupant can be prevented from getting caught in the sliding door 4.

In the present embodiment, moreover, the stopping control means 28 prohibits the implementation of the opening/closing control by the opening/closing control means 26 for a certain period after completion of the implementation of the "stopping control". That is, the stopping control means 28 prohibits the automatic operation of the sliding door 4 for a certain period (a period of the order of several seconds) after stopping the sliding door 4, even when the door knob 4a of the sliding door 4 is operated. This procedure can prevent events, such as a fall of the occupant through the entrance 3, in consequence of the opening operation of the sliding door 4 due to the misoperation of the door knob 4a.

The stopping control means 28 further implements "braking control" for a certain period after completion of the implementation of the "stopping control". With the "braking control", when the sliding door 4 is detected by the operating state detection means 27 to be moving, the brakes are applied to the sliding door 4 so as to make the operating speed slower than under ordinary conditions. For example, the sliding door 4 may move under its own weight or the like. In such a case, the brakes are applied to the sliding door 4 to suppress the sudden opening or closing of the sliding door 4. The strength of the brakes is adjusted, for example, by the state of connection between the drive motor 11 and the drive pulley 13 by the transmission mechanism (electromagnetic clutch) 12.

After implementing the "stopping control", the stopping control means 28 switches the sliding door 4 to a state in which the sliding door 4 can be manually operated, rather than returning the sliding door 4 to a state in which the sliding door 4 can be automatically operated by the drive device 10. In the present embodiment, the stopping control means 28 brings the sliding door 4 to the state enabling its manual operation, when the movement of the sliding door 4 is not detected for a certain period by the operating state detection means 27 after implementation of the "braking control". By this procedure, the sliding door 4 can be opened and closed more safely. Furthermore, it becomes possible to prevent the occurrence of such a problem that the sliding door 4 cannot be opened because of a failure or the like in the drive device 10.

The above-mentioned opening/closing control of the sliding door 4 by the stopping control means 28 can be released by performing a predetermined operation. For example, this opening/closing control can be released by performing an operation for turning off an ignition key (not shown) for the vehicle 1.

In the present embodiment, moreover, the stopping control means 28 stops the operation of the sliding door 4, if the sliding door 4 is in the aforementioned "sliding operation" during the closing operation. If the sliding door 4 is in the "closing-up operation", however, the stopping control means 28 allows the closing operation of the sliding door 4 to continue. By this procedure, a fall of the occupant from inside the vehicle 1 to the outside can be suppressed. That is, while in the "closing-up operation", the operation of the sliding door 4 is continued, rather than stopped, whereby the movement of the sliding door 4 can be stopped more reliably.

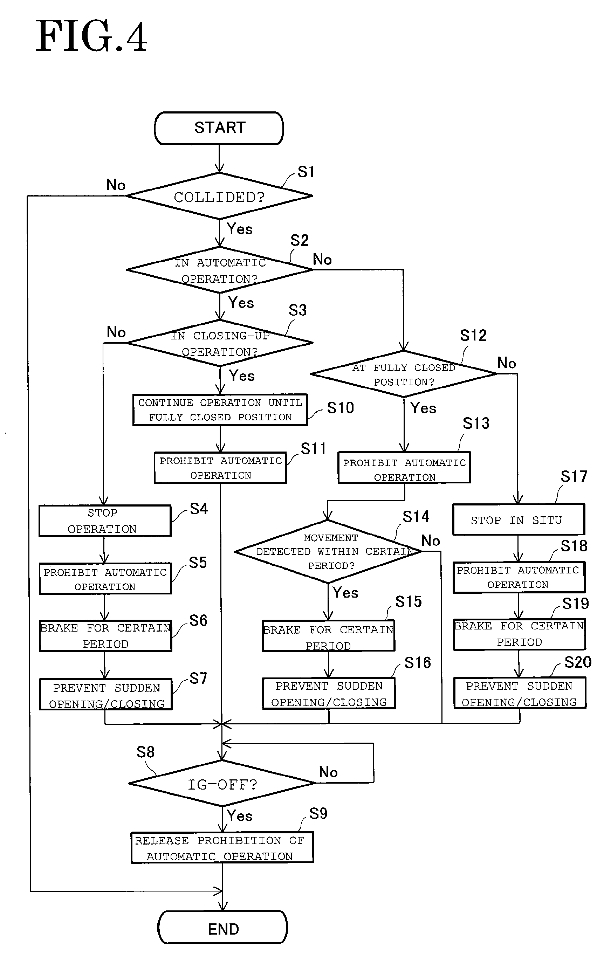

Next, an example of the door opening/closing control by the door opening/closing device will be described by reference to a flow chart as Fig. 4.

If, in Step S1, a collision of the vehicle 1 is detected, it is determined in Step S2 whether the sliding door 4 is in an automatic operation. That is, it is determined whether "opening/closing control" is implemented by the opening/closing control means 26. If the sliding door 4 is in operation (Step S2: Yes), it is further determined whether the aforementioned "closing-up operation" is being performed (Step S3). If the sliding door 4 is not in the "closing-up operation", namely, if the sliding door 4 is in the aforementioned "sliding operation", or in the "opening operation" (Step S3: No), "stopping control" is exercised. That is, the operation of the sliding door 4 (closing operation) by the opening/closing control means 26 is terminated (Step S4), and the automatic operation of the sliding door 4 is prohibited (Step S5). Then, in Step S6, the brakes are applied to the sliding door 4 to stop the motion of the sliding door 4. After this state is held for a certain period, "braking control" is implemented to suppress the sudden opening/closing of the sliding door 4 (Step S7). Then, it is determined whether an operation for turning off the ignition key has been performed. If the key turning-off operation has been performed (Step S8: Yes), the prohibition of the automatic operation is released in Step S9 to end a series of processings.

If, in Step S3, the sliding door 4 is in the "closing-up operation", the "opening/closing control" is continued until the sliding door 4 is brought to a fully closed position (Step S10). At a time when the sliding door 4 reaches the fully closed position, the "stopping control" is exercised. Since, in this case, the sliding door 4 is in a stopped state, a concrete action is to prohibit the automatic operation of the sliding door 4 (Step S11). By this action, the sliding door 4 is reliably held at the fully closed position.

If, in Step S2, the sliding door 4 is not in the automatic operation (Step S2: No), it is determined then in Step S12 whether the sliding door 4 is at the fully closed position. If the sliding door 4 is at the fully closed position (Step S12: Yes), the sliding door 4 is in a stopped state. Thus, the automatic operation of the sliding door 4 is then prohibited (Step S13). If, then, the operation of the sliding door 4 is detected within a certain period (Step S14: Yes), in Step S15, the brakes are applied to the sliding door 4 to stop the operation of the sliding door 4. After this state is held for a certain period, "braking control" is implemented to suppress the sudden opening/closing of the sliding door 4 (Step S16), whereafter the program proceeds to Step S8.

If, in Step S12, the sliding door 4 is not at the fully closed position, for example, if the sliding door 4 is in a half-open state (Step S12: No), "stopping control" is immediately executed to stop the sliding door 4 on the spot (Step S17). Then, in Step S18, the automatic operation of the sliding door 4 is prohibited, and the state of the brakes being applied to the sliding door 4 is held for a certain period (Step S19). After a lapse of the certain period, "braking control" is exercised in Step S20 to suppress the sudden opening/closing of the sliding door 4. Then, the program proceeds to Step S8.

According to the door opening/closing device 20 concerned with the present embodiment, as described above, it is possible, for example, to suppress the opening or closing operation of the sliding door 4 ascribed to impact or the like in a collision of the vehicle 1. Hence, the occupant or luggage can be inhibited from being thrown out of the vehicle, or the occupant can be inhibited from getting caught in the door member.

### Embodiment 2

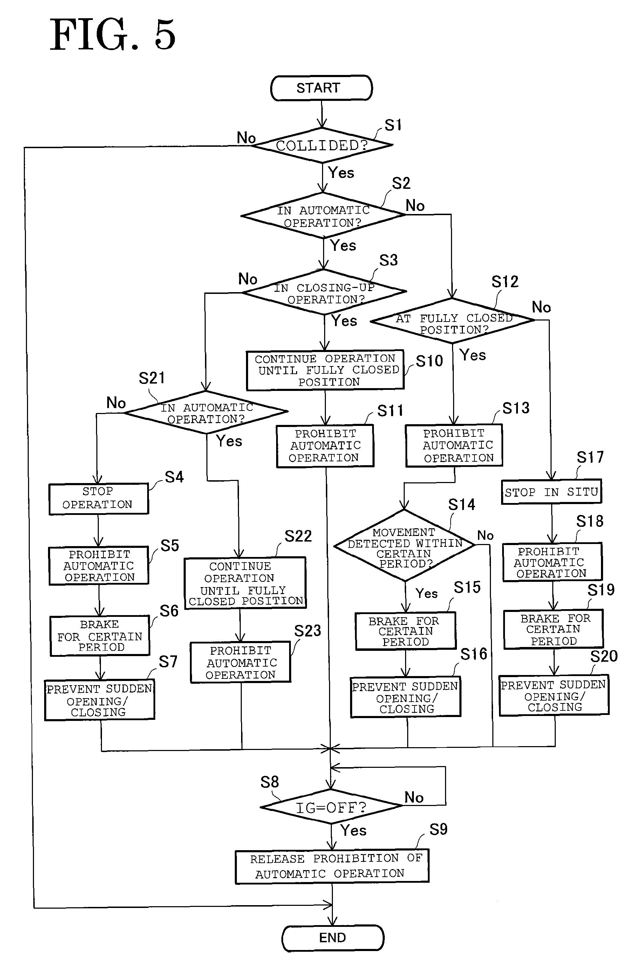

Fig. 5 is a flow chart showing an example of door opening/closing control according to Embodiment 2.

In the foregoing embodiment, if the sliding door 4 is in the opening operation or closing operation when a collision of the vehicle 1 is detected, the stopping control means 28 stops the operation of the sliding door 4 on the spot. In the present embodiment, on the other hand, if the sliding door 4 is in the closing operation when a collision of the vehicle 1 is detected, the stopping control means 28 allows the closing operation to continue, without stopping the operation of the sliding door 4.

Concretely, as shown in Fig. 5, the present embodiment is different from Embodiment 1 in that Steps S21 to S23 are added after Step S3. In detail, if, in Step S3, the sliding door 4 is not in the "closing-up operation" (Step S3: No), the program proceeds to Step S21 to determine further whether the sliding door 4 is in the closing operation. If the sliding door 4 is not in the closing operation, namely, if the sliding door 4 is in the opening operation (Step S21: No), the program proceeds to Step S4. If the sliding door 4 is in the closing operation (Step S21: Yes), the program proceeds to Step S22 to continue "opening/closing control" until the sliding door 4 comes to the fully closed position. At a time when the sliding door 4 reaches the fully closed position, the "stopping control" is exercised. In this case, the sliding door 4 is in a stopped state. Thus, concrete processing is to prohibit the automatic operation of the sliding door 4 (Step S23). Then, the program proceeds to Step S8.

As described above, if the sliding door 4 is in the closing operation, the operation of the sliding door 4 is continued. By this procedure, when a collision of the vehicle 1 occurs, a fall of the occupant or luggage from the vehicle 1 can be suppressed more reliably.

The embodiments of the present invention have been described as above. However, the present invention is not limited to the above embodiments. The present invention can be modified or changed, as appropriate, without departing from the scope and spirit of the invention.

In the above embodiments, for example, a collision of the vehicle is detected by the impact sensor. However, the method of detecting the collision is not limited. For example, the presence of absence of a collision can be determined based on an image from an on-vehicle camera or the results of detection by a millimeter-wave radar. Moreover, the above-mentioned impact sensor may be configured to serve concurrently as an air bag device, whereby the door opening/closing device of a vehicle according to the present invention can be realized relatively inexpensively. Needless to say, however, the impact sensor may be provided separately from the air bag device.

In the above embodiments, the configuration in which the sliding door is automatically operated by the drive device is illustrated. However, there may be a configuration in which the sliding door is switched between the automatic operation and the occupant's manual operation by operating a predetermined switch or the like. If such a configuration is adopted, the aforementioned control is exercised upon selection of the automatic operation of the sliding door.

In the above embodiments, moreover, the present invention is described by taking the electric sliding door as an example of the door member. However, the present invention can be applied, for example, to an electric tail gate as well.

### Explanations of Letters or Numerals

- 1: Vehicle
- 2: Rear seat
- 3: Entrance
- 4: Sliding door
- 4a: Door knob
- 5: Latch mechanism
- 6: Panel member
- 7: Striker
- 8: Tail gate
- 10: Drive device
- 11: Drive motor
- 11a: Pulse sensor
- 12: Transmission mechanism
- 13: Drive pulley
- 14: Front guide pulley
- 15: Rear guide pulley
- 16: Endless wire
- 17: Bracket
- 20: Door opening/closing device
- 21: Impact sensor
- 25: Control unit
- 26: Opening/closing control means
- 27: Operating state detection means
- 28: Stopping control means

## Claims

1. A door opening/closing device of a vehicle including:
a door member provided to be capable of opening and closing an opening area formed in a vehicle body;
a drive device for driving the door member so as to be opened and closed; and
opening/closing control means for driving the drive device in response to an operation of a start switch by an occupant to control an opening/closing operation of the door member,
the door opening/closing device, comprising:
collision detection means which detects a collision of the vehicle; and
stopping control means which, upon detection of a collision of the vehicle by the collision detection means, implements stopping control for terminating opening/closing control by the opening/closing control means to stop the opening/closing operation of the door member.

2. The door opening/closing device of a vehicle according to claim 1, wherein
the stopping control means prohibits implementation of the opening/closing control by the opening/closing control means for a certain period after completion of implementation of the stopping control.

3. The door opening/closing device of a vehicle according to claim 1 or 2, further comprising
operating state detection means for detecting an operating state of the door member,
wherein if the door member is detected by the operating state detection means to be moving after completion of implementation of the stopping control, the stopping control means further implements braking control for slowing down a movement of the door member.

4. The door opening/closing device of a vehicle according to any one of claims 1 to 3, further comprising
operating state detection means for detecting an operating state of the door member,
wherein if the collision of the vehicle is detected by the collision detection means and the door member is detected by the operating state detection means to be in a closing operation, the stopping control means implements the stopping control at a time when the closing operation of the door member ends.

5. The door opening/closing device of a vehicle according to any one of claims 1 to 4, wherein
the stopping control means enables a manual operation of the door member after implementing the stopping control.

6. The door opening/closing device of a vehicle according to any one of claims 1 to 5, wherein
the collision detection means is an impact sensor constituting an air bag device loaded on the vehicle.

## Amended claims

### Amended claims under Art. 19.1 PCT

**1.** (Amended) A door opening/closing device of a vehicle including:
a door member provided to be capable of opening and closing an opening area formed in a vehicle body;
a drive device for driving the door member so as to be opened and closed; and
opening/closing control means for driving the drive device in response to an operation of a start switch by an occupant to control an opening/closing operation of the door member,
the door opening/closing device, comprising:
collision detection means which detects a collision of the vehicle;
stopping control means which, upon detection of a collision of the vehicle by the collision detection means, implements stopping control for terminating opening/closing control by the opening/closing control means to stop the opening/closing operation of the door member; and
operating state detection means for detecting an operating state, indicating a movement rather than a position, of the door member,
wherein if the door member is detected by the operating state detection means to be moving after completion of implementation of the stopping control, the stopping control means implements braking control for slowing down the movement of the door member.

**2.** (Amended) A door opening/closing device of a vehicle including:
a door member provided to be capable of opening and closing an opening area formed in a vehicle body;
a drive device for driving the door member so as to be opened and closed; and
opening/closing control means for driving the drive device in response to an operation of a start switch by an occupant to control an opening/closing operation of the door member,
the door opening/closing device, comprising:
collision detection means which detects a collision of the vehicle;
stopping control means which, upon detection of a collision of the vehicle by the collision detection means, implements stopping control for terminating opening/closing control by the opening/closing control means to stop the opening/closing operation of the door member; and
operating state detection means for detecting an operating state, indicating a movement rather than a position, of the door member,
wherein if the collision of the vehicle is detected by the collision detection means and the door member is detected by the operating state detection means to be in a closing-up operation for moving the door member toward an interior of the vehicle, the stopping control means implements the stopping control at a time when the closing-up operation of the door member ends.

**3.** (Amended) The door opening/closing device of a vehicle according to claim 1 or 2, wherein
the stopping control means prohibits implementation of the opening/closing control by the opening/closing control means for a certain period after the completion of implementation of the stopping control.

**4.** Deleted)

**5.** (Amended) The door opening/closing device of a vehicle according to any one of claims 1 to 3, wherein
the stopping control means enables a manual operation of the door member after implementing the stopping control.

**6.** (Amended) The door opening/closing device of a vehicle according to any one of claims 1 to 3 and 5, wherein
the collision detection means is an impact sensor constituting an air bag device loaded on the vehicle.

Statement under Art. 19.1 PCT

International Application No.: PCT/JP2014/080385
International Filing Date: 17 November 2014
Applicant:
   Name: Mitsubishi Jidosha Kogyo Kabushiki Kaisha
   Address: 33-8, Shiba 5-chome, Minato-ku, Tokyo 108-8410 JAPAN
Agent:
   Name: KURIHARA Hiroyuki
   Address: Kurihara Internation Patent Office,
      Iwasaki Bldg. 6F, 3-15 Hiroo 1-chome, Shibuya-ku, Tokyo 150-0012 JAPAN
   Telephone number: 81-2-3444-6361
Agent's File reference: FP20140706

Dear Sir/Madam

The Applicant, who received the International Search Report relating to the above identified International Application transmitted on 3 February 2015, hereby files amendment under Artcle 19 (1) as in the attached sheets.

We hereby would like to amend the claims 1, 2, 3, 5 and 6, also cancel the claim 4.

The basis for the amendments:

Claim 1
 The constitution of the old claim 1 is limited to the constitution of the old claim 3, as well as clarifying the expression " 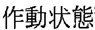 " as the expression " 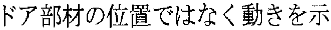 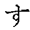 " based on the paragraph [0033] of the description.

Claim 2
 The constitution of the old claim 1 is limited to the constitution of the old claim 4, as well as limiting the expression " 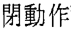 " to the expression " 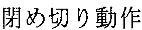 ". Further, the expression " 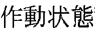 " is clarified as the expression " 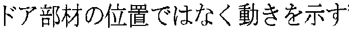 " based on the paragraph [0033] of the description.

Claim 3
 The old claim 2 is brought down in conformity to the above amendment of the claim 2.

Claim 5
 The cited claims are changed in conformity to the above amendment of the claims 1 and 2.

Claim 6
 The cited claims are changed in conformity to the above amendment of the claims 1 and 2.

The Applicant also files as attached herewith a brief statement explaining the amendment and indicating any impact the amendment might have on the description or the drawings.
